# EUROPÄISCHE PATENTSCHRIFT

(11) **EP 3 140 173 B1**
(45) Veröffentlichungstag und Bekanntmachung des Hinweises auf die Patenterteilung: **19.02.2020**
(21) Anmeldenummer: 15722928.7
(22) Anmeldetag: 07.05.2015
(51) Int. Cl.: B60W 30/18, B60W 10/11, B60W 10/02

(54) **VERFAHREN ZUM BETRIEB EINES FAHRZEUGS**
METHOD FOR OPERATING A VEHICLE
PROCÉDÉ DE FONCTIONNEMENT D'UN VÉHICULE

(30) Priorität: 09.05.2014 DE 102014006898
(43) Veröffentlichungstag der Anmeldung: 15.03.2017
(73) Patentinhaber: Audi AG, 85045 Ingolstadt (DE)
(72) Erfinder: KOPP, Andreas, 85092 Kösching (DE)
(74) Vertreter: Askaryar, Jama
(86) Internationale Anmeldenummer: PCT/EP2015/000939
(87) Internationale Veröffentlichungsnummer: WO 2015/169448

(56) Entgegenhaltungen:
- WO-A1-2011/006571
- DE-A1-102010 046 235
- DE-A1-102010 052 385

## Beschreibung

Die Erfindung betrifft ein Verfahren zum Betrieb eines Fahrzeugs mit zumindest einer Drehmomentübertragungsvorrichtung, welche bei Rotation in einem Fluid planscht, und mit zumindest zwei Achsen, welche jeweils mindestens zwei Räder aufweisen, und mit zumindest einer steuerbaren Kupplungsvorrichtung, mittels der die Drehmomentübertragungsvorrichtung und zumindest eines der Räder wahlweise drehmomentübertragend gekoppelt oder entkoppelt werden können.

Aus der Offenlegungsschrift US 2007/0193808 A1 ist ein Steuerverfahren für den Antriebsstrang eines Fahrzeugs mit einer vom Antriebsstrang abkoppelbaren, sekundären Antriebsachse bekannt. Demnach wird die sekundäre Antriebsachse zum Zwecke der Kraftstoffeinsparung vom Antriebsstrang abgekoppelt, falls sich die Fahrzeuggeschwindigkeit oberhalb eines vorgegebenen Geschwindigkeitsschwellenwerts befindet. Falls die Fahrzeuggeschwindigkeit unterhalb des vorgegebenen Geschwindigkeitsschwellenwerts liegt wird die sekundäre Antriebsachse mit dem Antriebsstrang verbunden, um die Wirkung des regenerativen Bremsens zu verstärken.

Aus der Offenlegungsschrift DE 10 2005 024 757 A1 ist ein Verfahren zum Zu- und Abschalten des Allradantriebs bei Einsatzfahrzeugen und Arbeitsmaschinen, die keine Längssperren aufweisen, bekannt. Danach wird der Allradantrieb zugeschaltet, wenn die Fahrzeuggeschwindigkeit einen vorgegebenen Schwellenwert unterschreitet und das Getriebeabtriebsmoment einen vorgegebenen Schwellenwert überschreitet. Des Weiteren ist vorgesehen, dass der Allradantrieb abgeschaltet wird, wenn die Fahrzeuggeschwindigkeit einen vorgegebenen Schwellenwert überschreitet oder wenn das Getriebeabtriebsmoment einen vorgegebenen Schwellenwert unterschreitet.

Schließlich ist aus der Offenlegungsschrift DE 10 2010 052 385 A1 ein Verfahren zur Steuerung eines Schwungnutzbetriebs in einem Antriebsstrang eines Kraftfahrzeugs mit einer Antriebseinheit, einem Getriebe und einer Kupplung bekannt.

Es ist die Aufgabe der vorliegenden Erfindung, bei einem Fahrzeug der eingangs genannten. Art ein Betriebsverfahren bereitzustellen, mittels dem der Energieverbrauch reduziert werden kann. Insbesondere soll bei einem Fahrzeug mit Verbrennungsmotor der Kraftstoffverbrauch und der Schadstoffausstoß reduziert werden und bei einem Fahrzeug mit E-Maschine der Verbrauch elektrischer Energie vermindert werden.

Diese Aufgabe wird durch das Verfahren gemäß Anspruch 1 gelöst. Vorteilhafte Ausgestaltungen des Verfahrens sind Gegenstand der Unteransprüche,

Das Verfahren gemäß dem Anspruch 1 betrifft ein Fahrzeug der eingangs beschriebenen Art. In einem Betriebszustand, in dem kein Drehmomentenwunsch eines Fahrzeugführers vorliegt, werden die Drehmomentübertragungsvorrichtung und das zumindest eine Rad entkoppelt, falls die Fahrgeschwindigkeit des Fahrzeugs größer oder gleich einem vorgegebenen Geschwindigkeitsschwellenwert ist. Falls die Fahrgeschwindigkeit kleiner ist als der vorgegebene Geschwindigkeitsschwellenwert wird die Drehmomentübertragungsvorrichtung und das zumindest eine Rad drehmomentübertragend gekoppelt.

Unter einer Drehmomentübertragungsvorrichtung im Sinne der Erfindung sind drehbar gelagerte Bauteile im Antriebsstrang (Wirkkette vom Antriebsmotor bis zum Rad) des Fahrzeugs zu verstehen, welche zur Übertragung eines Drehmoments entlang des Antriebsstrangs ausgebildet sind. Lediglich beispielhaft seien Kupplungsvorrichtungen (formschlüssig oder reibschlüssig, vorzugsweise Nasskupplungen), die rotierenden Elemente eines Drehmomentwandlers eines Automatikgetriebes oder die rotierenden Elemente eines Verteilergetriebes (Differenzial) genannt. Die Drehmomentübertragungsvorrichtung weist zumindest ein drehbar gelagertes Element auf, welches bei Rotation in einem Fluid planscht und dadurch Verdrängungsarbeit verrichtet. Bei dem Fluid kann es sich beispielsweise um Öl handeln, welches zur Schmierung und/oder zur Kühlung der Drehmomentübertragungsvorrichtung dient.

Unter einem Betriebszustand des Fahrzeugs im Sinne der Erfindung ist jeder Zustand des Fahrzeugs zu verstehen, in dem das Fahrzeug sich bewegt, also rollt und nicht steht. Der Fahrzeugführer äußert seinen Drehmomentwunsch, das heißt die von ihm gewünschte Antriebsarbeit beziehungsweise Antriebsleistung des Fahrzeugs, vorzugsweise über ein von ihm beeinflussbares Bedienelement, beispielsweise ein Fahrpedal. Liegt nun kein Drehmomentwunsch des Fahrzeugführers vor, so ist dieses Bedienelement unbetätigt.

Der Geschwindigkeitsschwellenwert kann im Speicher einen elektronischen Steuereinrichtung als fest applizierter Wert hinterlegt sein oder sich in Abhängigkeit von Betriebsparametern variabel aus einem Kennfeld berechnen.

Der Erfindung liegen nun zwei, den Antriebsenergieverbauch des Fahrzeugs reduzierende Effekte zugrunde:
Zum einen ist es vorteilhaft, einmal gewonnene kinetische Energie bei Nichtvorliegen eines Drehmomentwunsches des Fahrzeugführers zur Überwindung einer möglichst weiten Fahrstrecke zu nutzen. Um dies zu erreichen, ist die Reduzierung von Fahrwiderständen, insbesondere fahrzeugimmanenten Reibungswiderständen, anzustreben.

Zum anderen ist es vorteilhaft, dass Fluide, welche mit bewegten Bestandteilen des Fahrzeugs in Verbindung stehen und den sich in diesen Fluiden bewegenden Teilen bei niedrigen Temperaturen einen doch erheblichen Widerstand entgegensetzen, schnell auf Betriebstemperatur zu bringen. Auf die Erfindung bezogen bedeutet dies, dass die Drehmomentübertragungsvorrichtung beziehungsweise deren rotierenden Bestandteile, welche bei Rotation in diesem Fluid planschen, bei niedrigen Betriebstemperaturen des Fluids aufgrund der höheren Viskosität eine größere Verdrängungsarbeit verrichten als bei höheren Betriebstemperaturen des Fluids. Diese höheren Verluste bei niedrigeren Temperaturen müssen von einem Antriebsmotor des Fahrzeugs zusätzlich erbracht werden, um einen Drehmomenten- beziehungsweise Leistungswunsch des Fahrzeugführers zu erfüllen. Diese, vom Antriebsmotor zusätzlich erbrachte Leistung äußert sich in einem erhöhten Kraftstoffverbrauch, einem erhöhten Schadstoffausstoß und einer reduzierten Reichweite. Von daher ist es erstrebenswert, das Fluid möglichst schnell auf höhere Temperaturen zu bringen und ein späteres Absenken der Temperatur zu vermeiden.
Dies kann beispielsweise dadurch erreicht werden, dass die Drehmomentübertragungsvorrichtung gezielt in Rotation versetzt wird oder deren Rotationsgeschwindigkeit erhöht wird, um so den durch die Verdrängungsarbeit verursachten Wärmeeintrag in das Fluid zu steigern.

Diese beiden sich zunächst widersprechenden Aspekte werden durch das erfindungsgemäße Verfahren in sehr vorteilhafter Weise gezielt eingesetzt. Demnach wird bei einer Fahrzeuggeschwindigkeit oberhalb des Geschwindigkeitsschwellenwerts die Drehmomentübertragungsvorrichtung und das zumindest eine Rad entkoppelt, wodurch ein Mitschleppen der Drehmomentübertragungsvorrichtung durch das rotierende Rad nicht mehr gegebenen ist. Dadurch kommt es zu einer Verlangsamung der rotierenden Drehmomentübertragungsvorrichtung, idealerweise bis zum Stillstand. Durch diese Verringerung der Rotationsgeschwindigkeit werden die durch Verdrängungsarbeit erzeugten inneren Verluste des Antriebsstrangs deutlich reduziert, wodurch der zuvor erläuterte erste Aspekt gefördert wird. Die Beschränkung dieser Maßnahme auf einen Geschwindigkeitsbereich des Fahrzeugs oberhalb des Geschwindigkeitsschwellenwerts ist darin begründet, dass die Überwindung größerer Strecken durch reines Rollen (es liegt kein Drehmomentwunsch des Fahrzeugführers vor) vor allem bei Überlandfahrten oder Autobahnfahrten, also bei höheren Geschwindigkeiten und entsprechend ausgebauten Fahrstraßen, möglich ist. Im Gegensatz dazu ist die Überwindung längerer Strecken durch das Ausrollen des Fahrzeugs in geschlossenen Ortschaften, also bei niedrigeren Geschwindigkeiten, aus verkehrstechnischen Gründen nur seltenen möglich. Von daher wird bei einer Fahrzeuggeschwindigkeit unterhalb des Geschwindigkeitsschwellenwerts die Drehmomentübertragungsvorrichtung und das zumindest eine Rad drehmomentübertragend gekoppelt, wodurch die Rotation und das Plantschen der Drehmomentübertragungsvorrichtung im Fluid aufrechterhalten oder durch eine Beschleunigung der Rotationsgeschwindigkeit sogar noch verstärkt wird. Durch die so erhöhte Verdrängungsarbeit wird der Wärmeeintrag in das Fluid verstärkt und ein schnelles Erreichen oder Beibehalten höherer Betriebstemperaturen des Fluids begünstigt.
Auf diese Weise werden bei Fahrzeugen mit Verbrennungsmotor der Kraftstoffverbrauch und die Schadstoffemissionen reduziert. Bei Fahrzeugen mit Elektroantrieb wird der Verbrauch elektrischer Energie vermindert.

In einer Ausgestaltung des Verfahrens nach Anspruch 2 ist die Drehmomentübertragungsvorrichtung als ein Ausgleichsgetriebe ausgebildet. Unter einem Ausgleichsgetriebe ist insbesondere ein Differenzial, beispielsweise ein Achsdifferenzial, zu verstehen, welches Ungleichheiten in den Drehgeschwindigkeiten der Räder einer Achse ausgleicht. In diesem Fall kann die steuerbare Kupplungsvorrichtung als formschlüssige oder reibschlüssige Kupplung ausgebildet sein, welche im Kraftfluss zwischen dem Ausgleichsgetriebe und einem der Räder angeordnet ist.

In einer Ausgestaltung des Verfahrens nach Anspruch 3 weist die Kopplungsvorrichtung ein automatisiertes Geschwindigkeitswechselgetriebe auf, wobei die zumindest eine Drehmomentübertragungsvorrichtung dem automatisierten Geschwindigkeitswechselgetriebe zugeordnet ist, um dieses mit einer Antriebseinheit des Fahrzeugs drehmomentübertragend zu koppeln.

Dabei kann es sich bei dem automatisierten Geschwindigkeitswechselgetriebe insbesondere um einen Stufenautomat, ein Doppelkupplungsgetriebe oder ein automatisiertes Handschaltgetriebe handeln. Bei der Antriebseinheit kann es sich um einen Elektromotor und/oder um einen Verbrennungsmotor handeln.

In einer Ausgestaltung des Verfahrens nach Anspruch 4 weist die Drehmomentübertragungsvorrichtung zumindest eine als Nasskupplung ausgebildete, steuerbare Kupplung zum wahlweisen Koppeln und Entkoppeln des Geschwindigkeitswechselgetriebes mit dem Antriebsmotor auf.

In einer weiteren Ausgestaltung des Verfahrens nach Anspruch 5 wird in dem Betriebszustand, in dem kein Drehmomentmomentwunsch des Fahrzeugführers vorliegt, die zumindest eine steuerbare Kupplung derart gesteuert wird, dass das Geschwindigkeitswechselgetriebe und die Antriebseinheit entkoppelt sind.

In diesem Fall besteht also keine drehmomentübertragende Verbindung zwischen dem Geschwindigkeitswechselgetriebe und der Antriebseinheit. Die steuerbare Kupplung ist dabei vorzugsweise als nasslaufende Reibkupplung ausgebildet.

In einer weiteren Ausgestaltung des Verfahrens nach Anspruch 6 ist zumindest eine steuerbare Kupplung als Reibkupplung ausgebildet, wobei diese in einen Schlupfzustand gebracht wird, falls die Fahrgeschwindigkeit kleiner ist als der vorgegebenen Geschwindigkeitsschwellenwert.

Unter einem Schlupfzustand ist dabei das gezielte Kontaktieren der Reibelemente der Reibkupplung zu verstehen, wobei zwischen den Reibelementen eine Relativbewegung beziehungsweise ein Drehzahlunterschied aufrechterhalten bleibt. Die bei diesem Schlupfzustand entstehende Reibungswärme wird an das Fluid, in welchem die Reibkupplung bei Rotation planscht, übertragen und dient der weiteren, schnellen Erwärmung. Dadurch wird erreicht, dass das Fluid schneller Betriebstemperatur erreicht, und somit die Viskosität und die Verdrängungsverluste reduziert werden.

In einer Ausgestaltung des Verfahrens nach Anspruch 7 weist die Drehmomentübertragungsvorrichtung zumindest einen Drehmomentwandler auf.

In einer Ausgestaltung des Verfahrens nach Anspruch 8 wird zum drehmomentübertragenden Koppeln der Drehmomentübertragungsvorrichtung und des mindestens einen Rads ein Gang des Geschwindigkeitswechselgetriebes eingelegt.

Dabei wird in einer Ausgestaltung nach Anspruch 9 ein Gang mit einem möglichst großem Übersetzungsverhältnis eingelegt.

Durch das Einlegen eines Ganges, insbesondere eines Ganges mit einem möglichst großem Übersetzungsverhältnis, wird ein Kraftschluss zwischen der Drehmomentübertragungsvorrichtung und dem Rad hergestellt. Dadurch wird die Drehmomentübertragungsvorrichtung durch das mindestens eines Rad mitgeschleppt, dessen Rotationsgeschwindigkeit dadurch erhöht, durch das Plantschen im Fluid Verdrängungsarbeit verrichtet und Wärme erzeugt. Die drehmomentübertragende Kopplung durch Einlegen eines Gangs ist eine besonders elegante und einfache Art und Weise, da bei automatisierten Getrieben das Einlegen eines Gangs unabhängig vom Fahrzeugführer durch eine Steuereinrichtung vorgenommen werden kann. Durch das Einlegen eines Gangs mit einem möglichst großem Übersetzungsverhältnis kann eine sehr große Rotationsgeschwindigkeit der Drehmomentübertragungsvorrichtung erreicht und die-Wärmeproduktion im Fluid beschleunigt werden. Bei der Wahl des einzulegenden Gangs beziehungsweise des zu wählenden Übersetzungsverhältnisses sind Komfortaspekte (Geräuschentwicklung) und Bauteilschutzaspekte zu berücksichtigen.

In einer Ausgestaltung des Verfahrens nach Anspruch 10 wird der Gang auch dann eingelegt, wenn ein Fahrzeugführer mittels einer Bedieneinrichtung eine Neutralstellung . des Geschwindigkeitswechselgetriebes wählt und/oder eine von Betriebsbedingungen des Fahrzeugs abhängige Schaltbedingung zum Schalten des Geschwindigkeitswechselgetriebes in der Neutralstellung, welche durch eine dem Geschwindigkeitswechselgetriebe zugeordnete Steuereinrichtung überprüft wird, erfüllt ist.

Diese Ausgestaltung des Verfahrens betrifft Betriebssituationen des Fahrzeugs, in denen entweder der Fahrzeugführer über eine entsprechende Bedieneinrichtung (beispielsweise ein Wählhebel des Geschwindigkeitswechselgetriebes) oder eine Steuerfunktionalität, welche in der Steuereinrichtung in Form von Software hinterlegt ist, ein Versetzen des Geschwindigkeitswechselgetriebes in die Neutralstellung anfordert. Unter der Neutralstellung ist dabei das Auslegen aller Gänge des Geschwindigkeitswechselgetriebes zu verstehen. Der besonders vorteilhafte Effekt dieser Ausgestaltung des Verfahrens besteht nun darin, dass die Anforderung zum Versetzen des Geschwindigkeitswechselgetriebes in die Neutralstellung ignoriert wird und der Gang trotzdem eingelegt wird oder eingelegt bleibt. Somit werden die zu Anspruch 1 beschriebenen positiven Effekte durch die schnellere Erwärmung des Fluids erreicht.

Diese Ausgestaltung des Verfahrens berücksichtigt, dass diese fluiderwärmenden Maßnahmen nur soweit sinnvoll sind, als die Temperatur des Fluids unterhalb eines vorgegebenen Temperaturschwellenwerts ist. Hat das Fluid eine bestimmte Betriebstemperatur erreicht, so wird die Kopplung der Drehmomentübertragungsvorrichtung des zumindest einen Rads nicht mehr durchgeführt, da in diesem Fall das Überwinden einer möglichst großen Fahrstrecke durch Ausrollen des Fahrzeugs als sinnvoll erachtet wird.

Im Folgenden wird die Erfindung anhand der beigefügten Figuren näher erläutert. In den Figuren sind:
- Fig. 1: . eine schematische Darstellung eines Fahrzeugs;
- Figuren 2 bis 4: schematische Darstellungen von Ausführungs-beispielen für Drehmomentübertragungsvorrichtungen und zugeordneten steuerbaren Kopplungsvorrichtungen des Fahrzeugs.

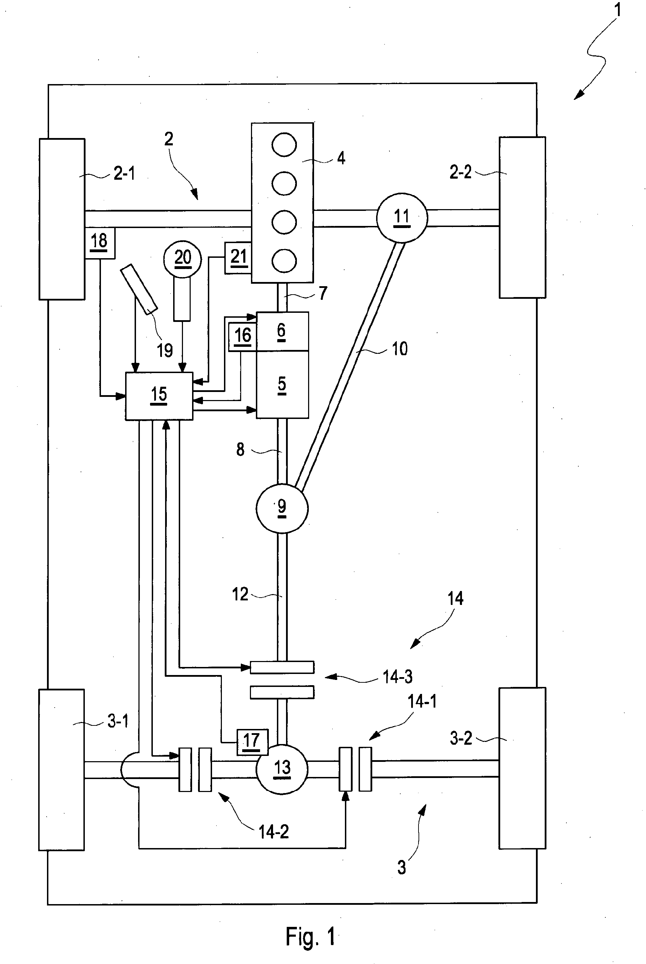

In Figur 1 ist ein Fahrzeug 1 schematisch dargestellt. Aus der Gründer der besseren Übersichtlichkeit sind nur die Komponenten dargestellt, welche zur Erläuterung der Erfindung notwendig sind.

Das Fahrzeug 2 verfügt über eine Vorderachse 2 und eine Hinterachse 3, jeweils mit zwei Rädern 2-1, 2-2 und 3-1, 3-2. Das Fahrzeug 1 verfügt ferner über eine Antriebseinheit 4 in Form eines Verbrennungsmotors oder eines Elektromotors, eine erste steuerbare Kopplungsvorrichtung 5 in Form eines automatisierten Geschwindigkeitswechselgetriebe und eine dem Geschwindigkeitswechselgetriebe zugeordnete - erste Drehmomentübertragungsvorrichtung 6. Bei dem automatisierten Geschwindigkeitswechselgetriebe 5 handelt es sich insbesondere um ein automatisch gesteuertes Doppelkupplungsgetriebe oder einen sogenannten Stufenautomat. Im Falle des Doppelkupplungsgetriebes ist die zugeordnete erste Drehmomentübertragungsvorrichtung 6 als automatisierte, nasse Doppelkupplung bekannter Bauart ausgebildet. Im Falle des Stufen automaten ist die zugeordnete erste Drehmomentübertragungsvorrichtung 6 als Drehmomentwandler bekannter Bauart ausgebildet.

Die erste Drehmomentübertragungsvorrichtung 6, sei es die Doppelkupplung oder der Drehmomentwandler, weisen drehend gelagerte Bauteile (Kupplungsscheiben bei der Doppelkupplung; Pumpe und Turbine beim Stufenautomaten) auf, welche bei Rotation in einem Fluid planschen. Im Falle der Doppelkupplung dient das Fluid insbesondere der Schmierung und Kühlung des Kupplungsscheiben, während das Fluid beim Drehmomentwandler vor allem der hydrodynamischen Kraftübertragung dient.

Die Antriebseinheit 4 ist über eine Abtriebswelle 7 mit der ersten Drehmomentübertragungsvorrichtung 6 drehmomentübertragend gekoppelt. Die erste Drehmomentübertragungsvorrichtung 6 dient der Kopplung und Entkopplung der Antriebseinheit 4 und der ersten Kopplungsvorrichtung 5 (Geschwindigkeitswechselgetriebe).

Eine erste Zwischenwelle 8 verbindet das Geschwindigkeitswechselgetriebe 5 mit einem Zwischenachsdifferenzial 9. Das Zwischenachsdifferenzial 9 ist über eine zweite Zwischenwelle 10 mit einem an der Vorderachse angeordneten vorderen Differenzial 11 und über eine dritte Zwischenwelle 12 mit einen an der Hinterachse angeordneten hinteren Differenzial 13 verbunden. Das Zwischenachsdifferenzial 9, die vordere Differenzial 11 und das hintere Differenzial 13 sind als Ausgleichsgetriebe bekannter Bauart ausgebildet.

Das hintere Differenzial 13 ist als eine zweite Drehmomentübertragungsvorrichtung 13 des Fahrzeugs 1 anzusehen. Auch die zweite Drehmomentübertragungsvorrichtung 13 umfasst Bauteile beziehungsweise Elemente, welche rotierend gelagert sind und bei Rotation in einem Fluid, insbesondere einem Schmieröl, plantschen.

Das Fahrzeug 1 verfügt ferner über eine zweite steuerbare Kopplungsvorrichtung 14, welche zumindest eine steuerbare Kupplung, im Ausführungsbeispiel drei steuerbare Kupplungen 14, umfasst. Die Kupplungen 14 sind an der dritten Zwischenwelle 12 und auf gegenüberliegenden Seiten des hinteren Differenzials 13 an den Teilachsen der Hinterachse 3 angeordnet. Mittels der zweiten steuerbaren Kopplungsvorrichtung 14, welche als Reibkupplungen oder Klauenkupplungen ausgebildet sein können, können das hintere Differenzial 13 und die Räder des Fahrzeugs 1 wahlweise drehmomentübertragend gekoppelt oder entkoppelt werden.

Das Fahrzeug 1 verfügt ferner über eine Steuervorrichtung 15, welche mit der ersten Drehmomentübertragungsvorrichtung 6, der zweiten Drehmomentübertragungsvorrichtung 13, der ersten Kopplungsvorrichtung 5, der zweiten Kopplungsvorrichtung 14, einem Temperaturfühler 16 zum Erfassen der Temperatur der ersten Drehmomentübertragungsvorrichtung 6, einem zweiten Temperaturfühler 17 zur Erfassung der Temperatur der zweiten Drehmomentübertragungsvorrichtung 13, einem Geschwindigkeitssensor 18, einem Fahrpedal 20 für einen (nicht dargestellten) Fahrzeugführer zur Eingabe eines Drehmomentenwunsches, einer Bedieneinrichtung für den (nicht dargestellten) Fahrzeugführer zur Steuerung des Geschwindigkeitswechselgetriebes 5, und einem Temperaturfühler 21 zur Erfassung der Temperatur des Antriebseinheit 4 über Daten- und Steuerleitungen (volle. Linien) verbunden. Die Steuervorrichtung 5 empfängt dabei die Signale der Temperaturfühler 16, 17, 21, des Geschwindigkeitssensors 18, des Fahrpedals 19 und der Bedieneinrichtung 20.

In der Steuervorrichtung 15 sind Steuerfunktionen und Steueralgorithmen und Kennfelder in Form von Software hinterlegt, auf Basis derer die Steuervorrichtung 15 Aktuatoren und andere Funktionselemente der Antriebseinheit 4, der ersten Kopplungsvorrichtung 5, der zweiten Kopplungsvorrichtung 14 und der ersten Drehmomentübertragungseinrichtung 6 steuert.

Insbesondere sind in der Steuervorrichtung 15 Steuerfunktionalitäten hinterlegt, auf Basis derer die Steuereinrichtung 15, die erste Kopplungseinrichtung 5, die zweite Kopplungseinrichtung 14 und die erste Drehmomentübertragungsvorrichtung 6 unabhängig vom Fahrzeugführer steuert.

Gemäß der Erfindung wird in einem Betriebszustand in dem kein Drehmomentwunsch des Fahrzeugführers vorliegt, die erste Drehmomentübertragungsvorrichtung 6 beziehungsweise die zweite Drehmomentübertragungsvorrichtung 13 und die Räder der Achsen 2, 3 mittels der ersten steuerbaren Kopplungsvorrichtung 5 beziehungsweise der zweiten steuerbaren Kopplungsvorrichtung 14 entkoppelt, falls die Fahrgeschwindigkeit des Fahrzeugs 1 größer oder gleich einem vorgegebenen Geschwindigkeitsschwellenwerts ist.
Ist die Fahrgeschwindigkeit des Fahrzeugs 1 jedoch kleiner als der vorgegebene Geschwindigkeitsschwellenwert, so werden die erste Drehmomentübertragungsvorrichtung 6 beziehungsweise die zweite Drehmomentübertragungsvorrichtung 13 und die Räder der Achse 2, 3 mittels der ersten steuerbaren Kopplungsvorrichtung 5 beziehungsweise der zweiten steuerbaren Kopplungsvorrichtung 14 drehmomentübertragend gekoppelt.

Die Steuervorrichtung 15 wertet dabei die Signale des Geschwindigkeitssensors 18 und des Fahrpedals 19 aus. Ein Betriebszustand des Fahrzeugs liegt nur dann vor, wenn das Fahrzeug 1 betrieben, das heißt bewegt, wird. Bei Stillstand des Fahrzeugs 1 liegt kein Betriebszustand im Sinne der Erfindung vor. Erkennt die Steuervorrichtung 15, dass die Fahrgeschwindigkeit größer 0 ist, so liegt ein Betriebszustand vor. Ein Drehmomentwunsch des Fahrzeugführers liegt nicht vor, wenn das Fahrpedal 19 als unbetätigt erkannt wird. Der Geschwindigkeitsschwellenwert kann als fest applizierte Größe oder als in Abhängigkeit von Betriebsparametern variabel berechnete Größe in der Steuervorrichtung 15 hinterlegt sein.

Die Steuervorrichtung 15 überprüft ferner die Signale, welche der Fahrzeugführer über die elektronische Bedieneinrichtung 20 sendet. Mittels der Bedieneinrichtung 20 kann der Fahrzeugführer verschiedene Übersetzungsstufen, Rückwärtsgang, Neutralstellung oder eine Parkposition des automatisierten Geschwindigkeitswechselgetriebes 5 anfordern. Unter Neutralstellung ist dabei ein Zustand des Geschwindigkeitswechselgetriebes 5 zu verstehen, in dem kein Gang eingelegt ist und somit keine Drehmomentübertragung innerhalb des Getriebes stattfindet. Die Signale gehen der Steuervorrichtung 15 zu, werden dort ausgewertet und in Steuerbefehle für die Aktuatoren des Geschwindigkeitswechselgetriebes 5 umgewandelt.

In einer weiteren, vorteilhaften Ausgestaltung des Verfahrens werden die erste Drehmomentübertragungsvorrichtung 6 und/oder die zweite Drehmomentübertragungsvorrichtung 13 und die Räder 2-1, 2-2, 3-1, 3-2 zumindest einer der Achsen 2, 3 mittels der jeweils zugeordneten Kopplungsvorrichtung 5, 14 nur dann drehmomentübertragend gekoppelt, falls die Fahrgeschwindigkeit kleiner ist als der vorgegebene Geschwindigkeitsschwellenwert und zusätzlich eine Temperatur des Fahrzeugs 1, insbesondere die Temperatur des Fluids der ersten Drehmomentübertragungsvorrichtung 6 und/oder die Temperatur des Fluids der zweiten Drehmomentübertragungsvorrichtung 13, geringer ist als ein vorgegebener, in der Steuervorrichtung 15 hinterlegter Temperaturschwellenwert. Die jeweiligen Temperaturen stehen der Steuervorrichtung 15 über die Temperaturfühler 16, 17 zur Verfügung.

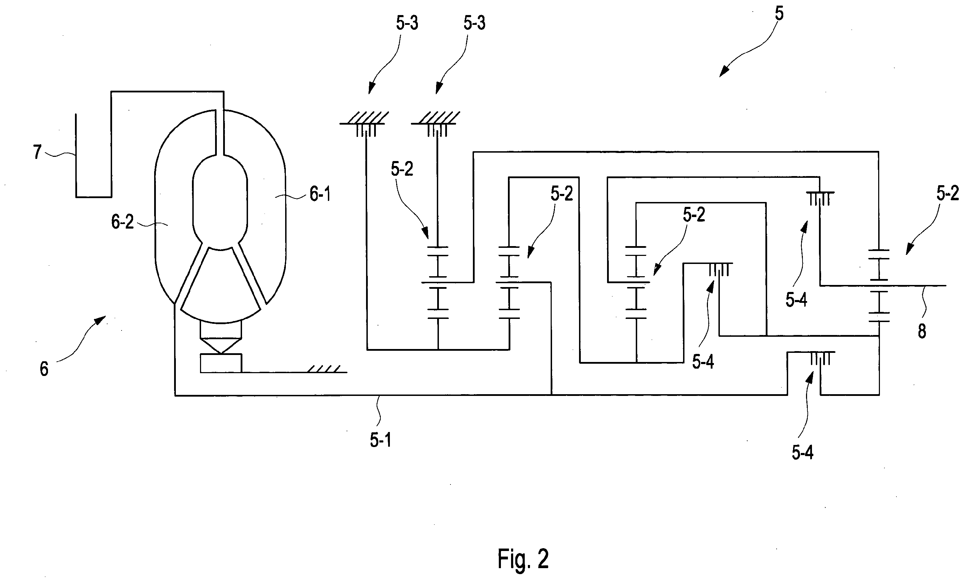

In Figur 2 ist ein erstes Ausführungsbeispiel der ersten Drehmomentübertragungsvorrichtung 6 und der zugeordneten, ersten Kopplungsvorrichtung 5 schematisch dargestellt. Die erste Drehmomentübertragungsvorrichtung 6 ist als Drehmomentwandler ausgebildet und der als automatisiertes Geschwindigkeitswechselgetriebe 6 (Stufenautomat) ausgebildeten ersten Kopplungsvorrichtung 5 zugeordnet.

Der Drehmomentwandler 6 ist von bekannter Bauart. Ein antriebsseitiges Element, die sogenannte Pumpe 6-1, ist über die Abtriebswelle 7 mit dem Verbrennungsmotor 4 (siehe Fig. 1) drehmomentübertragend gekoppelt und wird bei Betrieb des Verbrennungsmotors 4 in Rotation versetzt. Das abtriebsseitige Element, die Turbine 6-2, ist mit der Pumpe über ein gemeinsames Fluid (nicht dargestellt) drehmomentübertragend koppelbar.

Pumpe 6-1 und Turbine 6-2 plantschen bei Rotation in dem gemeinsamen Fluid. Durch die Viskosität des Fluids ist eine hydrodynamische Kraftübertragung zwischen Pumpe 6-1 und Turbine 6-2 möglich. Die Turbine 6-2 ist mit einer Eingangswelle 5-1 des Geschwindigkeitswechselgetriebes 5 verbunden, so dass bei Rotation der Turbine 6-2 auch die Eingangswelle 5-1 des Geschwindigkeitswechselgetriebes 5 in Rotation versetzt wird.

Auch der Stufenautomat 5 ist von bekannter Bauform. Er umfasst mehrere Planetengetriebe 5-2, gehäusefeste, steuerbare Bremsen 5-3 und steuerbare Kupplungen 5-3, welche derart wirkend verbunden sind, dass durch Aktuierung der Bremsen 5-3 und Kupplungen 5-4 unterschiedliche Übersetzungen dargestellt werden können. Die Abtriebswelle des Stufenautomats entspricht der ersten Zwischenwelle 8, wie in Figur 1 schematisch dargestellt, und ist mit der vorderen Achse 2 und der hinteren Achse 3 gekoppelt.

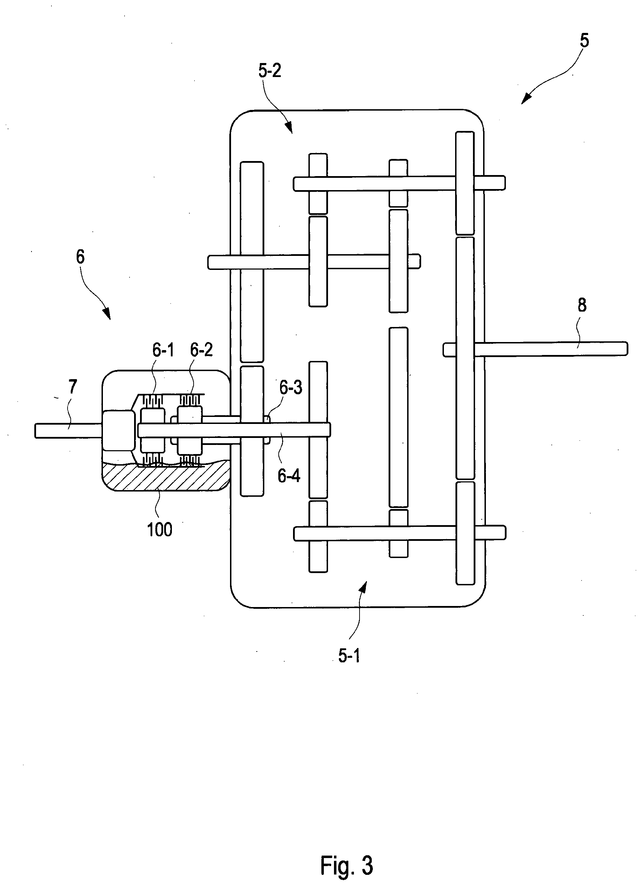

In Figur 3 ist ein zweites Ausführungsbeispiel der ersten Drehmomentübertragungsvorrichtung 6 und der zugeordneten, ersten Kopplungsvorrichtung 5 und schematisch dargestellt. Die erste Drehmomentübertragungsvorrichtung 6 ist als Doppelkupplung in Nassbetriebsweise ausgebildet. Die beiden Kupplungen 6-1, 6-2 sind vorzugsweise als Lamellenkupplungen ausgebildet. Die antriebsseitigen Elemente der Kupplungen sind mit der Abtriebswelle 7 der Antriebseinheit 4 drehmomentübertragend verbunden.

Das Geschwindigkeitswechselgetriebe 5 ist als Doppelkupplungsgetriebe bekannter Bauform ausgebildet. Es weist zwei Teilgetriebe 5-1, 5-2 (in Fig. 3 durch unterschiedliche Graustufen gekennzeichnet) auf, wobei mittels des einen Teilgetriebes 5-1 die Übersetzungsstufen der ungeraden Gänge und mit dem anderen Teilgetriebe 5-2 die Übersetzungsstufen der geraden Gänge dargestellt werden. Die beiden Teilgetriebe 5-1, 5-2 sind mit einer gemeinsamen Getriebeausgangswelle (hier die erste Zwischenwelle 8) drehmomentübertragend verbindbar, über welche das Drehmoment zu den Achsen weitergeleitet wird.

In dem Geschwindigkeitswechseigetriebe 5 weist jedes Teilgetriebe 5-1, 5-2 mehrere Sätze von ineinandergreifenden Zahnradpaaren auf, wodurch unterschiedliche Übersetzungen dargestellt werden können. Die Aktivierung der Übersetzungsstufen erfolgt bekannterweise durch elektrisch, pneumatisch oder hydraulisch gesteuerte Schaltstangen (nicht dargestellt), welche auf, meist als Schiebemuffe ausgebildete formschlüssige Kupplungen einwirken und je nach gewünschter Übersetzungsstufe einen Kraftschluss herstellen.

Die Auswahl und Aktivierung der Übersetzungsstufen (Gänge) des Geschwindigkeitswechselgetriebe 5 in den Figuren 2 und 3 erfolgt durch die elektronische Steuervorrichtung, wie sie in Figur 1 schematisch dargestellt ist.

Die beiden Kupplungen 6-1, 6-2 sind jeweils mit einem der beiden Teilgetriebe 5-1, 5-2 über unabhängig voneinander rotierende Wellen 6-3, 6-4 verbunden. Die Wellen 6-3, 6-4 sind bekannterweise als Hohlwelle und darin verlaufende Vollwelle konzentrisch angeordnet.

Die in nasser Betriebsweise ausgeführten Kupplungen 6-1, 6-2 plantschen bei Rotation in einem Fluid 100, wodurch eine Schmierung und Kühlung sichergestellt wird.

Im Folgenden wird nun das Betriebsverfahren anhand der Figuren 2 und 3 erläutert.

In einem Betriebszustand (bei bewegtem Fahrzeug), in dem kein Drehmomentwunsch des Fahrzeugführers vorliegt (Fahrpedal unbetätigt), werden die als Drehmomentwandler ausgebildete erste Drehmomentübertragungsvorrichtung 6 der Figur 2 beziehungsweise die als Doppelkupplung ausgebildete zweite Drehmomentübertragungsvorrichtung 6 nach Figur 3 jeweils mit zumindest einem Rad 2-1, 2-2, 2-3, 2-4 des Fahrzeugs (siehe Figur 1) drehmomentübertragend gekoppelt, falls die Fahrgeschwindigkeit des Fahrzeugs 1 kleiner ist als der vorgegebene Geschwindigkeitsschwellenwert.

Die Kopplung der Drehmomentübertragungsvorrichtung 5 mit dem zumindest einem Rad erfolgt mittels der jeweils zugeordneten Kopplungsvorrichtungen 6.

Im Ausführungsbeispiel der Figur 2 wird die Kopplung durch Einlegen eines Gangs des als Stufenautomat ausgebildeten Geschwindigkeitswechselgetriebes 5 realisiert.

Im Ausführungsbeispiel der Figur 3 erfolgt die drehmomentübertragende Kopplung durch Einlegen eines Gangs des als Doppelkupplungsgetriebe ausgebildeten Geschwindigkeitswechselgetriebes 5 realisiert. Die beiden steuerbaren Kupplungen 6-1, 6-2 sind dabei geöffnet, sodass die Antriebseinheit 4 und das Geschwindigkeitswechselgetriebe 5 entkoppelt sind.

Mit Verweis auf Figur 1 wird deutlich, dass in diesem Fall die Turbine 6-1 des Drehmomentwandlers (Figur 2) beziehungsweise das abtriebsseitige Element einer der beiden Kupplungen 6-1, 6-2 drehmomentübertragend mit den Rädern 2-1, 2-2 der vorderen Achse 2 gekoppelt ist.

Falls die dem Differenzial 13 der zweiten Achse zugeordneten Kupplungen 14 geschlossen sind, so trifft diese drehmomentübertragende Kopplung auch auf die Räder 3-1, 3-2 der hinteren Achse 3 zu. Auf diese Weise wird die Turbine 6-1 des Drehmomentwandlers 6 (Fig. 2) bzw. das abtriebsseitige Element einer der beiden Kupplungen 6-1, ,6-2 der Doppelkupplung 6 (Fig. 3) durch die jeweiligen Räder 2-1, 2-2, 3-1, 3-2 mitgeschleppt und dadurch in Rotation versetzt oder die Rotationsgeschwindigkeit erhöht. Durch diese Rotation verrichten die Turbine 6-1 beziehungsweise das abtriebsseitige Element der jeweiligen Kupplung 6-1, 6-2 der Doppelkupplung 6 eine erhöhte Verdrängungsarbeit im Fluid, wodurch es zu einem spürbar erhöhtem Wärmeeintrag in das Fluid kommt. Als Konsequenz daraus kommt es zu einer schnellen Erwärmung des Fluids, einer dadurch resultierenden schnellen Reduzierung der Viskosität und der schnelleren Verringerung von Antriebsverlusten.

Zur Steigerung dieses Effekts ist es vorteilhaft, eine möglichst hohe Rotationsgeschwindigkeit der Turbine 6-1 beziehungsweise des abtriebsseitigen Elements der Kupplung 6-1, 6-2 durch Einlegen eines Gangs mit einem möglichst großen Übersetzungsverhältnis zu erreichen. Unter einem möglichst hohen Übersetzungsverhältnis ist dabei das Übersetzungsverhältnis zu verstehen, welches bei der aktuellen Fahrgeschwindigkeit des Fahrzeugs eingestellt werden kann, ohne dass es zu einer Schädigung von Komponenten durch eine Überdrehzahl kommt. Als weitere Limitierung könnte auch die Geräuschentwicklung durch zu schnell rotierende Teile angesehen werden.

Gemäß dem Verfahren werden die Drehmomentübertragungsvorrichtung, das heißt der Drehmomentwandler 6 in Figur 2 und die Doppelkupplung 6 gemäß Figur 3 und die Räder 2-1, 2-2, 3-1, 3-2 des Fahrzeugs 1 entkoppelt, falls die Fahrgeschwindigkeit des Fahrzeugs 1 größer oder gleich dem vorgegebenen Geschwindigkeitsschwellenwert ist. Dies wird bei den Ausführungsbeispielen der Figur 2 bzw. der Figur 3 dadurch realisiert, dass alle Gänge des Stufenautomats 5 bzw. alle Gänge des Doppelkupplungsgetriebes 5 ausgelegt werden, wodurch keine drehmomentübertragende Verbindung zwischen dem Drehmomentwandler 5 beziehungsweise der Doppelkupplung 5 und den jeweiligen Rädern 2-1, 2-2, 3-1, 3-2 mehr besteht.

Um den Wärmeeintrag in das Fluid beim Ausführungsbeispiel der Figur 3 noch zusätzlich zu erhöhen, kann die Kupplung 6-1, 6-2, welche mit den Rädern 2-1, 2-2, 3-1, 3-2 gekoppelt ist, in einen Schlupfzustand gebracht werden. Unter Schlupfzustand ist dabei ein in Kontakt bringen der antriebs-und abtriebsseitigen Elemente (Kupplungsscheiben) der Kupplungen zu verstehen, ohne dass es zu einem vollständigen Kraftschluss kommt. Durch das Aneinanderreiben der abtriebs- und antriebsseitigen Reibelemente der Kupplung wird Reibwärme erzeugt, welche wiederum an das Fluid übertragen wird und dieses erwärmt.

Bei den Ausführungsbeispielen der Figuren 2 und 3 ist ferner auch besonders vorteilhaft, wenn der Gang auch dann eingelegt wird, wenn der Fahrzeugführer mittels der Bedieneinrichtung 20 eine Neutralstellung des jeweiligen Geschwindigkeitswechselgetriebes 5 (Stufenautomat nach Figur 2 und Doppelkupplungsgetriebe nach Figur 3) wählt und/oder eine von Betriebsbedingungen des Fahrzeugs 1 abhängige Schaltbedingung zum Schalten des Geschwindigkeitswechselgetriebes 5 in Neutralstellung, welche durch die Steuervorrichtung 15 überprüft wird, erfüllt ist. Unter der Neutralstellung ist dabei ein Betriebszustand des jeweiligen Geschwindigkeitswechselgetriebes 5 zu verstehen, bei dem kein Gang aktiviert ist, das heißt die Kopplungsvorrichtungen 6 (Drehmomentwandler nach Figur 2 und Doppelkupplung nach Figur 3) und die Räder 2-1, 2-2, 3-1, 3-2 keine Kraftübertragung über das Geschwindigkeitswechselgetriebe 5 erfahren. Diese Neutralstellung kann entweder vom Fahrzeugführer mittels der Bedieneinrichtung 20 (üblicherweise mit dem Symbol "N" gekennzeichnet) oder vollautomatisch und unabhängig vom Fahrzeugführer von der Steuervorrichtung 15 angefordert werden. Beispielsweise kann die Steuervorrichtung 15 im Sinne eines reduzierten Verbauchs an Antriebsenergie (Kraftstoff oder elektrische Energie) für günstig erachten, wenn kein Drehmomentwunsch vom Fahrer vorliegt, das Geschwindigkeitswechselgetriebe 5 in eine Neutralstellung zu versetzen, um die durch das rollende Fahrzeug zu überwindende Strecke zu erhöhen.

Gemäß diesem Aspekt des Verfahrens wird jedoch die Anforderung des Fahrzeugführers, das Geschwindigkeitswechselgetriebe 5 in eine Neutralstellung zu versetzen, nicht befolgt und trotzdem von der Steuervorrichtung 15 ein Gang eingelegt. Dies dient dazu, den Erwärmungsvorgang des Fluids zu beschleunigen.

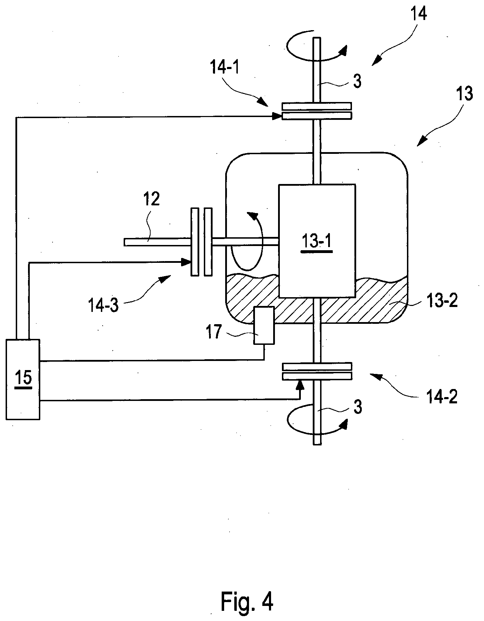

Im Folgenden wird ein weiteres Ausführungsbeispiel anhand der Figur 4 näher erläutert.

In diesem Ausführungsbeispiel ist die zweite Drehmomentübertragungsvorrichtung 13 als Ausgleichsgetriebe beziehungsweise als Differenzial bekannter Bauart ausgebildet. Das Differenzial 13 dient dazu, Geschwindigkeitsunterschiede an den Rädern der hinteren Achse 3 zuzulassen, ohne dass Verspannungen im Antriebsstrang auftreten. Aufgrund des aus dem Stand der Technik hinreichend bekannten Aufbaus einer derartigen Differenzials wurde aus Gründen der besseren Übersichtlichkeit eine genaue Darstellung aller für die Differenzialfunktion notwendigen Komponenten verzichtet. Vielmehr ist in Figur 4 die miteinander in Wirkverbindung stehenden Zahnräder des Differenzials 13 als Block 13-1 dargestellt. Zur Schmierung und Kühlung der beteiligten Zahnräder des Differenzials 13-1 planscht zumindest eines der rotierenden Elemente in einem vorzugsweise als ÖI ausgebildeten Fluid 13-2.

Die dem Differenzial 13 zugeordnete zweite Kopplungsvorrichtung 14 weist im Ausführungsbeispiel der Figur 4 drei steuerbare, vorzugsweise als reib-oder formschlüssige Kupplungen ausgebildete Kupplungen 14-1, 14-2, 14-3 auf. Mittels (nicht dargestellter) elektrischer, pneumatischer oder hydraulischer Aktuatoren können diese Kupplungen 14-1, 14-2, 14-3 von der Steuervorrichtung 15 wahlweise geöffnet oder geschlossen werden.

Gemäß dem Betriebsverfahren für das Fahrzeug 1 wird nun im Betriebszustand (Fahrzeug ist in Bewegung), bei dem kein Drehmomentwunsch des Fahrzeugführers vorliegt und die Fahrgeschwindigkeit des Fahrzeugs 1 unterhalb des vorgegebenen Geschwindigkeitsschwellenwertes liegt, das Differenzial 13 mittels der Kupplungen 14-1, 14-2, 14-3 mit den Rädern der hinteren Achse 3 und/oder der vorderen Achse 2 drehmomentübertragend verbunden. Zum Koppeln mit den Rädern 3-1, 3-2, der hinteren Achse 3 sind lediglich die den Teilachsen zugeordneten Kupplungen 14-1, 14-2 zu schließen. Zum Koppeln mit den Rädern 2-1, 2-2 der vorderen Achse 2 kann alternativ oder zusätzlich auch die an der Verbindungswelle 12 angeordnete Kupplung 14-3 geschlossen werden. Dadurch wird bewirkt, dass bei diesem Betriebszustand, bei dem das Fahrzeug lediglich rollt, die rotierenden Elemente des Differenzials 13, welche nun drehmomentübertragend mit den Rädern 2-1, 2-2, 3-1, 3-2 verbunden sind, von den Rädern 2-1, 2-2, 3-1, 3-2 mitgeschleppt, in Rotation versetzt oder zu schnelleren Rotationsgeschwindigkeiten beschleunigt werden. In jedem Fall kommt es zu einer erhöhten Verdrängungsarbeit der rotierenden Teile im Fluid und zu einer schnelleren Erwärmung.

Falls die Fahrzeuggeschwindigkeit gleich oder größer dem Geschwindigkeitsschwellenwert ist, werden die Kupplungen wieder geöffnet, um so zu ermöglichen, dass das lediglich rollende, das heißt antriebslose Fahrzeug eine größere Fahrstrecke überwinden kann.

Bei dem Verfahren kann es besonders vorteilhaft sein, die Drehmomentübertragungsvorrichtungen bei dem genannten Betriebszustand nur dann mit zumindest einem Rad des Fahrzeugs zu koppeln, falls eine dem Fahrzeug zugeordnete Temperatur, insbesondere eine Kühlmitteltemperatur, eine Öltemperatur oder die Temperatur des Fluids der Drehmomentübertragungsvorrichtung unterhalb eines vorgegebenen Temperaturschwellenwertes liegt. Dieser Temperaturschwellenwert kann lediglich beispielsweise im Temperaturbereich zwischen 70 und 90 Grad betragen. Ist die Temperatur größer oder gleich dem Temperaturschwellenwert, so werden die Drehmomentübertragungsvorrichtungen von den Rädern des Fahrzeugs entkoppelt. -

Das Verfahren bietet den Vorteil, einer schnelleren Erwärmung der Fluide der Drehmomentübertragungsvorrichtungen und dadurch eine deutliche Reduzierung der Verluste durch Verdrängungsarbeit. Das dazu durchgeführte Koppeln der Drehmomentübertragungsvorrichtungen mit den Rädern des Fahrzeugs ist jedoch auf einen Geschwindigkeitsbereich unterhalb eines Geschwindigkeitsschwellenwertes beschränkt, dessen Wert im Bereich der Geschwindigkeitslimits in geschlossenen Ortschaften liegen sollte (also zwischen 40-60 km/h). Innerhalb geschlossener Ortschaften ist es aufgrund des Verkehrsaufkommens, der Straßenführung, Verkehrszeichen und Ampeln nur sehr selten möglich, weitere Fahrstrecken nur durch Rollen, das heißt ohne Antrieb durch den Verbrennungsmotor, zu überwinden. Aus diesem Grund ist es für den Fahrzeugführer und die Passagiere eine merkliche Einbuße, wenn aufgrund der Kopplung der Drehmomentübertragungsvorrichtung und der Räder und den damit zusammenhängenden höheren Verlusten, die theoretisch zu überwindenden Fahrstrecken mit rollendem Fahrzeug verkürzt werden. Gleichzeitig jedoch ergibt sich der Vorteil einer spürbar schnelleren Erwärmung der Fluide in den Drehmomentübertragungsvorrichtungen und eine spürbare Reduzierung der Planschverluste. Außerhalb geschlossener Ortschaften, wenn die Fahrgeschwindigkeit des Fahrzeugs in der Regel oberhalb des Geschwindigkeitsschwellenwertes liegt ist die Wahrscheinlichkeit, durch ein lediglich rollendes Fahrzeug größere Fahrstrecken zu überwinden, größer, so dass hier auf des Koppeln der Drehmomentübertragungsvorrichtung mit den Rädern verzichtet wird.

## Patentansprüche

1. Verfahren zum Betrieb eines Fahrzeugs (1) mit
- zumindest einer Drehmomentübertragungsvorrichtung (6, 13), welche bei Rotation in einem Fluid planscht,
- zumindest zwei Achsen (2, 3) mit jeweils mindestens zwei Rädern (2-1, 2-2, 3-1, 3-2),
- zumindest einer steuerbaren Kopplungsvorrichtung (5, 14), mittels der die Drehmomentübertragungsvorrichtung (6, 13) und zumindest eines der Räder (2-1, 2-2, 3-1, 3-2) wahlweise drehmomentübertragend gekoppelt oder entkoppelt werden können,
wobei in einem Betriebszustand, in dem kein Drehmomentwunsch eines Fahrzeugführers vorliegt, die Drehmomentübertragungsvorrichtung (6, 13) und das zumindest eine Rad (2-1, 2-2, 3-1, 3-2) entkoppelt werden, falls die Fahrgeschwindigkeit des Fahrzeugs (1) größer oder gleich einem vorgegebenen Geschwindigkeitsschwellenwert ist, **dadurch gekennzeichnet, dass** in dem Betriebszustand die Drehmomentübertragungsvorrichtung (6, 13) und das zumindest eine Rad (2-1, 2-2, 3-1, 3-2) drehmomentübertragend gekoppelt werden, falls die Fahrgeschwindigkeit kleiner ist als der vorgegebene Geschwindigkeitsschwellenwert und die Temperatur des Fluids geringer ist als ein vorgegebener Temperaturschwellenwert.

2. Verfahren nach Anspruch 1, wobei die zumindest eine Drehmomentübertragungsvorrichtung (6, 13) als ein Ausgleichsgetriebe ausgebildet ist.

3. Verfahren nach einem der Ansprüche 1 bis 2, wobei die Kopplungsvorrichtung (5, 14) ein automatisiertes Geschwindigkeitswechselgetriebe aufweist und die zumindest eine Drehmomentübertragungsvorrichtung (6, 13) dem automatisierten Geschwindigkeitswechselgetriebe zugeordnet ist, um dieses mit einer Antriebseinheit (4) des Fahrzeugs (1) drehmomentübertragend zu koppeln.

4. Verfahren nach Anspruch 3, wobei die Drehmomentübertragungsvorrichtung (6, 13) zumindest eine als Nasskupplung ausgebildete, steuerbare Kupplung (6-1, 6-2) zum wahlweisen Koppeln und Entkoppeln des Geschwindigkeitswechselgetriebes mit der Antriebseinheit (4) aufweist.

5. Verfahren nach Anspruch 4, wobei in dem Betriebszustand, in dem kein Drehmomentmomentwunsch des Fahrzeugführers vorliegt, die zumindest eine steuerbare Kupplung (6-1, 6-2) derart gesteuert wird, dass das Geschwindigkeitswechselgetriebe und die Antriebseinheit (4) entkoppelt sind.

6. Verfahren nach einem der Ansprüche 4 bis 5, wobei die zumindest eine steuerbare Kupplung (6-1, 6-2) als Reibkupplung ausgebildet ist und in einen Schlupfzustand gebracht wird, falls die Fahrgeschwindigkeit kleiner ist als der vorgegebene Geschwindigkeitsschwellenwert.

7. Verfahren nach Anspruch 3, wobei die Drehmomentübertragungsvorrichtung (6, 13) zumindest einen Drehmomentwandler (6) aufweist.

8. Verfahren nach einem der Ansprüche 3 bis 7, wobei zum drehmomentübertragenden Koppeln der Drehmomentübertragungsvorrichtung (6, 13) und des mindestens einen Rads (2-1, 2-2, 3-1, 3-2) ein Gang des Geschwindigkeitswechselgetriebes eingelegt wird.

9. Verfahren nach Anspruch 8, wobei der eingelegte Gang ein möglichst großes Übersetzungsverhältnis aufweist.

10. Verfahren nach einem der Ansprüche 8 bis 9, wobei der Gang auch dann eingelegt wird, wenn ein Fahrzeugführer mittels einer Bedieneinrichtung (20) eine Neutralstellung des Geschwindigkeitswechselgetriebes wählt und/oder eine von Betriebsbedingungen des Fahrzeugs abhängige Schaltbedingung zum Schalten des Geschwindigkeitswechselgetriebes in die Neutralstellung, welche durch eine dem Geschwindigkeitswechselgetriebe zugeordnete Steuervorrichtung (15) überprüft wird, erfüllt ist.

## Claims

1. Method for operating a vehicle (1) having
at least one torque-transmitting device (6, 13), which splashes in a fluid during rotation,
at least two axles (2, 3) each having at least two wheels (2-1, 2-2, 3-1, 3-2),
at least one controllable coupling device (5, 14), by means of which the torque-transmitting device (6, 13) and at least one of the wheels (2-1, 2-2, 3-1, 3-2) can be selectively coupled or uncoupled in a torque-transmitting manner,
wherein in an operating state, in which there is no torque request of a vehicle driver, the torque-transmitting device (6, 13) and the at least one wheel (2-1, 2-2, 3-1, 3-2) are uncoupled, if the travel speed of the vehicle (1) is greater than or equal to a specified speed threshold value, **characterised in that** in the operating state the torque-transmitting device (6, 13) and the at least one wheel (2-1, 2-2, 3-1, 3-2) are coupled in a torque-transmitting manner, if the travel speed is less than the specified speed threshold value and the temperature of the fluid is less than a specified temperature threshold value.

2. Method according to claim 1, wherein the at least one torque-transmitting device (6, 13) is designed as a differential gear.

3. Method according to any one of claims 1 to 2, wherein the coupling device (5, 14) has an automated speed change transmission and the at least one torque-transmitting device (6, 13) is assigned to the automated speed change transmission, in order to couple the latter to a drive unit (4) of the vehicle (1) in a torque-transmitting manner.

4. Method according to claim 3, wherein the torque-transmitting device (6, 13) has at least one controllable clutch (6-1, 6-2) designed as a wet clutch for selectively coupling and uncoupling the speed change transmission with the drive unit (4).

5. Method according to claim 4, wherein in the operating state, in which there is no torque torque request of the vehicle driver, the at least one controllable clutch (6-1, 6-2) is controlled in such a manner that the speed change transmission and the drive unit (4) are uncoupled.

6. Method according to any one of claims 4 to 5, wherein the at least one controllable clutch (6-1, 6-2) is designed as a friction clutch and is brought into a slipping state, if the travel speed is less than the specified speed threshold value.

7. Method according to claim 3, wherein the torque-transmitting device (6, 13) has at least one torque converter (6).

8. Method according to any one of claims 3 to 7, wherein a gear of the speed change transmission is engaged for the torque-transmitting coupling of the torque-transmitting device (6, 13) and of the at least one wheel (2-1, 2-2, 3-1, 3-2).

9. Method according to claim 8, wherein the engaged gear has an as large as possible transmission ratio.

10. Method according to any one of claims 8 to 9, wherein the gear is also engaged when a vehicle driver by means of an operator control device (20) selects a neutral position of the speed change transmission and/or a switching condition dependent on the operating conditions of the vehicle is satisfied for switching the speed change transmission into the neutral position, which is checked by a control device (15) assigned to the speed change transmission.

## Revendications

1. Procédé pour faire fonctionner un véhicule (1) avec
- au moins un dispositif de transmission de couple (6, 13), lequel barbote dans un fluide lors de la rotation,
- au moins deux axes (2, 3) avec respectivement au moins deux roues (2-1, 2-2, 3-1, 3-2),
- au moins un dispositif d'accouplement (5, 14) pouvant être commandé, au moyen duquel le dispositif de transmission de couple (6, 13) et au moins une des roues (2-1, 2-2, 3-1, 3-2) peuvent être accouplés ou désaccouplés sélectivement avec transmission de couple,
dans lequel, dans un état de fonctionnement, dans lequel aucun souhait de couple d'un conducteur de véhicule n'est présent, le dispositif de transmission de couple (6, 13) et l'au moins une roue (2-1, 2-2, 3-1, 3-2) sont désaccouplés, si la vitesse de déplacement du véhicule (1) est supérieure ou égale à une valeur seuil de vitesse prédéfinie, **caractérisé en ce que**, dans l'état de fonctionnement, le dispositif de transmission de couple (6, 13) et l'au moins une roue (2-1, 2-2, 3-1, 3-2) sont accouplés avec transmission de couple, si la vitesse de véhicule est inférieure à la valeur seuil de vitesse prédéfinie et la température du fluide est inférieure à une valeur seuil de température prédéfinie.

2. Procédé selon la revendication 1, dans lequel l'au moins un dispositif de transmission de couple (6, 13) est réalisé en tant que différentiel.

3. Procédé selon l'une quelconque des revendications 1 à 2, dans lequel le dispositif d'accouplement (5, 14) présente une boîte de vitesses automatisée et l'au moins un dispositif de transmission de couple (6, 13) est associé à la boîte de vitesses automatisée, afin d'accoupler celle-ci à une unité d'entraînement (4) du véhicule (1) avec transmission de couple.

4. Procédé selon la revendication 3, dans lequel le dispositif de transmission de couple (6, 13) présente au moins un embrayage (6-1, 6-2) pouvant être commandé, réalisé en tant qu'embrayage humide, pour l'accouplement et le désaccouplement sélectifs de la boîte de vitesses avec l'unité d'entraînement (4).

5. Procédé selon la revendication 4, dans lequel, dans l'état de fonctionnement dans lequel aucun souhait de couple du conducteur du véhicule n'est présent, l'au moins un embrayage (6-1, 6-2) pouvant être commandé est commandé de telle sorte que la boîte de vitesses et l'unité d'entraînement (4) sont désaccouplées.

6. Procédé selon l'une quelconque des revendications 4 à 5, dans lequel l'au moins un embrayage (6-1, 6-2) pouvant être commandé est réalisé en tant qu'embrayage à friction et est amené dans un état de glissement, si la vitesse de déplacement est inférieure à la valeur seuil de vitesse prédéfinie.

7. Procédé selon la revendication 3, dans lequel le dispositif de transmission de couple (6, 13) présente au moins un convertisseur de couple (6).

8. Procédé selon l'une quelconque des revendications 3 à 7, dans lequel pour l'accouplement avec transmission de couple du dispositif de transmission de couple (6, 13) et de l'au moins une roue (2-1, 2-2, 3-1, 3-2), un rapport de la boîte de vitesses est enclenché.

9. Procédé selon la revendication 8, dans lequel le rapport enclenché présente un rapport de transmission le plus grand possible.

10. Procédé selon l'une quelconque des revendications 8 à 9, dans lequel le rapport est également enclenché lorsqu'un conducteur du véhicule sélectionne au moyen d'un dispositif de commande utilisateur (20) une position neutre de la boîte de vitesses et/ou qu'une condition de changement de vitesse dépendant des conditions de fonctionnement du véhicule, destinée au changement de vitesse de la boîte de vitesses dans la position neutre, laquelle est contrôlée par un dispositif de commande (15) associé à la boîte de vitesses, est remplie.
